# EUROPÄISCHE PATENTSCHRIFT

(11) **EP 3 738 860 B1**
(45) Veröffentlichungstag und Bekanntmachung des Hinweises auf die Patenterteilung: **12.01.2022**
(21) Anmeldenummer: 20169646.5
(22) Anmeldetag: 15.04.2020
(51) Int. Cl.: B62D 6/00, B62D 15/02, B62D 5/04

(54) **VERFAHREN UND LENKUNGSSTEUERGERÄT ZUM ERMITTELN EINER STELLGRÖSSE FÜR DAS EINSTELLEN EINES SERVOLENKMOMENTS BEI EINEM FAHRZEUGLENKSYSTEM**
METHOD AND STEERING CONTROL DEVICE FOR DETERMINING A VARIABLE FOR ADJUSTING A POWER STEERING TORQUE IN A VEHICLE STEERING SYSTEM
PROCÉDÉ ET APPAREIL DE COMMANDE DE DIRECTION PERMETTANT DE DÉTERMINER UNE GRANDEUR DE RÉGLAGE POUR LE RÉGLAGE D'UN COUPLE DE DIRECTION ASSISTÉE DANS UN SYSTÈME DE DIRECTION DE VÉHICULE

(30) Priorität: 14.05.2019 DE 102019206980
(43) Veröffentlichungstag der Anmeldung: 18.11.2020
(73) Patentinhaber: VOLKSWAGEN AG, 38440 Wolfsburg (DE)
(72) Erfinder: Stoltze, Lars, 38165 Lehre (DE); Bartels, Alexander, 38102 Braunschweig (DE); Sachwitz, Martin, 38118 Braunschweig (DE); Fricke, Hendrik, 38704 Liebenburg (DE)

(56) Entgegenhaltungen:
- DE-A1-102014 215 243
- DE-A1-102017 215 013
- DE-A1-102017 215 593
- US-A1- 2012 265 403
- US-A1- 2017 106 903

## Beschreibung

Die Erfindung betrifft ein Verfahren und ein Lenkungssteuergerät zum Ermitteln einer Stellgröße für das Einstellen eines Servolenkmoments bei einem Fahrzeuglenksystem. Das Fahrzeug kann ein Kraftfahrzeug sein und insbesondere ein Personenkraftwagen oder Lastkraftwagen. Das Fahrzeuglenksystem kann ein Servolenksystem sein.

Moderne Kraftfahrzeuge verfügen über einen elektrischen Servomotor, der eine zusätzliche oder ausschließliche (steer-by-wire) Lenkkraft zum Auslenken der Fahrzeugräder erzeugt. Beide Varianten sind von der Erfindung umfasst. DieLenkkraft wird hierin auch als Servolenkmoment und kann alternativ auch als Lenkunterstützungsmoment bezeichnet werden.

Dabei wird ein Fahrerwunsch für den Lenkwinkel beispielsweise mittels eines Drehmoment- oder Drehwinkelsensors an einer Lenksäule erfasst, die mit einer Lenkhandhabe verbunden ist, und an ein Lenkungssteuergerät übermittelt. Das Lenkungssteuergerät generiert dann ein Stellsignal für eine Leistungselektronik, die darauf basierend Steuerströme für den Elektromotor (Servomotor) erzeugt.

Zusätzlich sind Fahrerassistenzsysteme bekannt, wie beispielsweise Lane Keeping-Systeme, die ein versehentliches Verlassen der Fahrspur verhindern sollen. Diese liefern Signale an das Lenkungssteuergerät, die einem Lenkwunsch des Fahrerassistenzsystems entsprechen, um ebenfalls Lenkmomente und insbesondere fahrerunabhängige Lenkmomente zu generieren. Dabei wird ein Teil des vom Fahrerassistenzsystem angeforderten Lenkmoments auf das Eingangssignal des Sensors, der den Fahrerlenkwunsch erfasst, aufaddiert und somit zusätzlich ein direkter Anteil für das Stellsignal generiert. Dies bewirkt ein haptisches Feedback des Fahrerassistenzsystems für den Kraftfahrzeugführer, je nachdem, ob der Lenkwunsch des Fahrerassistenzsystems in Richtung des Fahrerlenkwunsches wirkt oder entgegen dieser Richtung.

Der Lenkwunsch des Fahrerassistenzsystems wird oftmals auch als Offset-Moment bezeichnet oder aber ein solches Offset-Moment wird basierend auf diesem Lenkwunsch erzeugt (zum Beispiel anhand geschwindigkeitsabhängiger Kennlinien). Der Begriff "Offset" bezieht sich dabei darauf, dass ein gemäß dem Fahrerlenkwunsch vorgegebenes Lenkmoment durch den Lenkwunsch des Fahrerassistenzsystems verändert wird und somit ein Offset (d. h. eine Abweichung) vom Fahrerlenkwunsch entsteht.

Ziel bei der Auslegung eines Fahrzeuglenksystems ist es oftmals, zumindest in bestimmten Fahrsituation ein definiertes haptisches Feedback für den Kraftfahrzeugführer auch bei Lenkeingriffen eines Fahrerassistenzsystems zu ermöglichen. Dies wird auch als das Einstellen eines definierten Lenkgefühls bezeichnet. Hierbei kann es schwierig sein, das Zusammenwirken des Fahrerlenkwunschs und des Offset-Moments definiert einzustellen und vorherzusehen. Beispielsweise ist das schlussendlich erzielte haptische Feedback für den Kraftfahrzeugführer auch von Reibungseffekten innerhalb des Fahrzeuglenksystems abhängig. Reibung kann insbesondere zwischen einem vom Servomotor angetriebenen Ritzel und einer Zahnstange auftreten, welche bei einer Verlagerung die Fahrzeugräder ausgelenkt.

Es ist bekannt, insbesondere das Offset-Moment in Anbetracht derartige Reibungseffekte geeignet anzupassen (zum Beispiel dessen Wert gemäß einer Kennlinie zu verändern), um ein definiertes Lenkgefühl für den Fahrer einzustellen. Hierdurch können die Reibungseffekte zumindest teilweise kompensiert werden. Dies beschränkt sich allerdings auf Gleitreibungseffekte, die ausreichend präzise schätzbar sind. Hintergrund hierzu findet sich in der DE 10 2004 021 951 A1. Für Haftreibungszustände sind derartige Schätzungen und rechnerische Kompensationen nicht mit einer gewünschten Genauigkeit möglich. Eine Auswirkung von Haftreibung in Fahrzeuglenksystemen wird zum Beispiel in der WO 08/116555 A1 diskutiert. Das Dokument DE10 2017 215 013 A1 offenbart ein Verfahren gemäß dem Oberbegriff der Ansprüche 1 und 11.

Eine Aufgabe der vorliegenden Erfindung ist es, das Einstellen eines definierten Lenkgefühls für einen Kraftfahrzeugführer auch bei Lenkeingriffen von Fahrerassistenzsystemen zu verbessern, insbesondere in Anbetracht möglicher Haftreibungszustände.

Diese Aufgabe wird durch ein Verfahren mit den Merkmalen von Anspruch 1 und eine Anordnung mit den Merkmalen von Anspruch 9 gelöst. Vorteilhafte Weiterbildungen sind in den abhängigen Ansprüchen angegeben. Es versteht sich, dass die vorstehend erwähnten Merkmale, Ausführungen und Varianten auch bei der erfindungsgemäßen Lösung vorgesehen sein bzw. auf diese zutreffen können.

Die Erfindung sieht allgemein vor, definierte Betriebszustände eines Fahrzeuglenksystems zu ermitteln und in Zuständen, in denen eine dominierende Haftreibung vorliegt bzw. wahrscheinlich ist, mögliche Lenkeingriffe eines Fahrerassistenzsystems im Rahmen einer Regelung zu berücksichtigen. Es wurde erkannt, dass insbesondere in einem Betriebszustand, in dem eine konstante Fahrdynamik als auch ein konstantes (Fahrer-) Lenkmoment vorliegt (zum Beispiel während einer Fahrt in einem Kreisverkehr oder beim Durchfahren einer langen Kurve) das Beaufschlagen des Fahrzeuglenksystems mit einem entsprechenden Offset-Moment per Regelung zu einem aus Sicht des Fahrers natürlichen Lenkgefühl führen kann. Insbesondere kann in diesem Zustand das Offset-Moment mit einem aktuell anliegenden Handmoment des Fahrers verrechnet werden bzw. zu diesem hinzuaddiert werden, um dann per Regelung das resultierende Soll-Lenkmoment einzustellen. Der aktuelle Fahrerlenkwunsch kann zum Beispiel einem anfänglichen Fahrerlenkwunsch bei Erkennen des statischen Zustands entsprechen und/oder als ein solcher abgespeichert werden.

Allgemein kann der Fahrerlenkwunsch einem sensorisch erfassten Handlenkmoment entsprechen, wobei nicht ausgeschlossen ist, dass zum Beispiel aufgrund einer mechanischen Kopplung mit einer auch fahrerunabhängig (zum Beispiel vom Aktor) bewegbaren Zahnstange der ermittelte Fahrerlenkwunsch (zum Beispiel das entsprechende Sensorsignal) nicht ausschließlich auf vom Fahrer erzeugte Kräfte zurückzuführen ist.

Durch dieses Vorgehen wird gewährleistet, dass ein Offsetmoment des Fahrerassistenzsystems ohne signifikante Beeinträchtigung des Lenkgefühls aufgebracht werden kann, obwohl der Haftreibungseinfluss rechnerisch schwer zu kompensieren bzw. zu berücksichtigen ist.

Hingegen kann in anderen Betriebszuständen, in denen eine dominierende Gleitreibung vorliegt bzw. wahrscheinlich ist, eine Steuerung vorgesehen sein, die die Gleitreibung z.B. rechnerisch bzw. modellbasiert kompensiert. Die Steuerung kann ein natürlicheres Lenkgefühl als eine Regelung ermöglichen, falls Letztere auf Basis einer nur geschätzten oder wenig genau gemessenen Ist-Größe arbeiten müsste.

Wahlweise kann also zwischen einer Regelung und einer Steuerung gewechselt werden, je nachdem welcher Betriebszustand vorliegt. Insbesondere kann vorgesehen sein, dass erfindungsgemäß ein nachfolgend erläuterter statischer Zustand sowie wenigstens einer von einem ersten und zweiten dynamischen Zustand ermittelbar ist. Je nach dem ermittelten Zustand, kann dann die Regelung oder Steuerung vorgenommen werden.

Im Detail betrifft die Erfindung ein Verfahren zum Einstellen eines Servolenkmoments bei einem Fahrzeuglenksystem, wobei das Servolenkmoment von einem Aktor (zum Beispiel einem Servomotor) des Fahrzeuglenksystems erzeugbar ist, mit:
- Erhalten eines Fahrerlenkwunsches;
- Erhalten eines Lenkwunsches von wenigstens einem Fahrerassistenzsystem;
- Erhalten von wenigstens einer Fahrdynamikgröße;
- Ermitteln eines statischen Zustands, bei dem eine Änderung des Fahrerlenkwunschs und der Fahrdynamikgröße jeweils unterhalb einer vorbestimmten Schwelle liegt;
und wenn der statische Zustand ermittelt wurde:
- Einstellen des Servolenkmoments per Regelung, wobei eine Stellgröße der Regelung auf Basis eines (zum Beispiel aktuellen, modellbasierten, erhaltenen und/oder bei Ermitteln des statischen Zustands vorliegenden) Fahrerlenkwunsches und des Lenkwunsches des Fahrerassistenzsystems ermittelt wird.

Bei dem Fahrerlenkwunsch kann es sich um ein Handmoment handeln. Dieses kann mittels einleitend erwähnter Sensoren gemessen werden. Der Fahrerlenkwunsch bzw. das Moment kann, zusätzlich oder alternativ, aber auch modellbasiert (d. h. rechnerisch) ermittelt werden, wofür zum Beispiel aktuell wirkende Fahrdynamikgrößen verwendet werden können und/oder ein Fahrzeugmodell (wie zum Beispiel ein herkömmliches Einspurmodell) zugrunde gelegt werden kann.

Der Lenkwunsch des Fahrerassistenzsystems kann von einem Steuergerät übermittelt werden. Er kann eine Größe eines gewünschten Offset-Moments bzw. eines gewünschten Lenkeingriffmoments angeben.

Die Fahrdynamikgröße kann zum Beispiel eine Gierrate, eine Querbeschleunigung, eine Fahrzeuggeschwindigkeit, eine Lenkposition, eine Lenkgeschwindigkeit und/oder wenigstens eine Radgeschwindigkeit sein. Diese können anhand bekannter Sensoren (beispielsweise von einem ESP-System) ermittelt und/oder modellbasiert bestimmt werden.

Die Stellgröße kann eine Stellgröße für eine Leistungselektronik des Aktors sein, damit dieser das Servolenkmoment erzeugt bzw. umsetzt.

Die Schwelle zum Erkennen des statischen Zustands kann derart gewählt sein, dass diese (im Wesentlichen) 0 beträgt, d. h. der statische Zustand kann einer ausbleibenden Änderung der genannten Größen entsprechen.

Wenn statische Zustand erkannt wurde, was beispielsweise von einem nachstehend erläuterten Lenkungssteuergerät ermittelt werden kann, kann der aktuelle Fahrerlenkwunsch gespeichert werden. Der Lenkwunsch des Fahrerassistenzsystems kann dann mit dem gespeicherten Fahrerlenkwunsch verrechnet werden (zum Beispiel unter Berücksichtigung der Vorzeichen aufaddiert werden). Insbesondere kann eine Sollgröße der Regelung (zum Beispiel ein Soll-Moment und insbesondere Soll-Servolenkmoment) als die bzw. anhand der verrechneten Größen ermittelt werden, insbesondere durch das geschilderte Aufaddieren. Anschließend kann eine Regelung vorgenommen werden, sodass diese Sollgröße tatsächlich erreicht wird. Hierfür kann zum Beispiel eine entsprechende Ist-Größe (zum Beispiel ein Ist-Servolenkmoment oder Ist-Fahrerlenkwunsch) in Form einer Regelschleife zurückgeführt werden, sodass die Stellgröße auf Basis vorliegender Regelabweichungen fortlaufend angepasst wird.

Insbesondere kann vorgesehen sein, dass der aktuelle und/oder gespeicherte Fahrerlenkwunsch als Referenz für einen Fahrerlenkwunsch ohne Eingriff des Fahrerassistenzsystems verwendet wird (d. h. denjenigen Fahrerlenkwunsch annähert oder als ein solcher betrachtet wird, der ohne Eingriff des Fahrerassistenzsystems vorliegt bzw. vorliegen würde).

Beispielsweise kann eine Differenz dieser Referenz und eines nach Erkennen des statischen Zustands gemessenen und nicht notwendigerweise gespeicherten Fahrerlenkwunsches gebildet werden und das Resultat hiervon kann als eine Ist-Größe für die Regelung verwendet werden. Insbesondere kann diese Differenz als aktuell umgesetzter Ist-Lenkwunsch des Fahrerassistenzsystems verwendet Beziehung weise betrachtet werden. Für die Regelung kann dann eine Regelabweichung zwischen einem erhaltenen Soll- und dem vorliegenden Ist-Lenkwunsch des Fahrerassistenzsystems gebildet werden. Diese Regelabweichung kann dann einem Regler zugeführt werden, der ganz oder zumindest anteilig die Stellgröße ermittelt.

Ein weiterer Anteil der Stellgröße kann optional in herkömmlicher Weise mittels einer Lenkunterstützungsfunktionen und/oder Lenksystemfunktion zum Beispiel per Steuerung ermittelt werden. Diese kann zum Beispiel basiert auf einem aktuellen Fahrerlenkwunsch sowie erhaltenen Dynamikgrößen (insbesondere der Fahrzeuggeschwindigkeit) und/oder anhand hinterlegt erkennen Linien eine Stellgröße zum Erzeugen eines Lenkunterstützungsmoments durch den Aktor ermitteln.

Hierbei hat sich vorteilhaft gezeigt, dass sich in dem erkannten statischen Zustand durch Einbringen bzw. Einregeln des gewünschten Offset-Moments des Fahrers ein natürliches Lenkgefühl einstellt und der Lenkwunsch des Fahrerassistenzsystems in einer definierten Weise umsetzbar ist. In dynamischen Zuständen, wie sie nachstehend erläutert werden, wurde hingegen erkannt, dass eine entsprechende Regelung aufgrund potenziell schnell variierender Betriebsgrößen in einem weniger intuitiven Lenkgefühl resultieren kann, weshalb dort eine Steuerung bevorzugt wird.

Eine Weiterbildung sieht vor, dass das Verfahren ferner folgendes umfasst:
- Ermitteln eines ersten dynamischen Zustands, bei dem eine Änderung des Fahrerlenkwunschs und/oder der Fahrdynamikgröße oberhalb einer vorbestimmten Schwelle liegt (die zum Beispiel wiederum im Wesentlichen 0 beträgt),
und wenn der erste dynamische Zustand ermittelt wurde:
- Einstellen des Servolenkmoments per Steuerung. Bevorzugt erfolgt dies gemäß einer weiteren Ausführungsform derart, dass eine Stellgröße der Steuerung auf Basis eines Fahrerlenkwunsches, des Lenkwunsches des Fahrerassistenzsystems und einer Gleitreibungsgröße ermittelt wird.

Die Steuerung kann umfassen, dass eine Sollgröße (zum Beispiel ein Soll-Servolenkmoment oder ein (Soll-) Gesamtlenkwunsch) anhand des Fahrerlenkwunsches, dem Lenkwunsch des Fahrerassistenzsystems und bevorzugt auch der Gleitreibungsgröße ermittelt wird. Darauf basierend kann dann die Stellgröße zum Umsetzen dieser Sollgröße ermittelt werden. Allerdings kann in diesem Fall eine Rückführung einer Istgröße (zum Beispiel eines Ist-Servolenkmoments) ausbleiben.

Die Gleitreibungsgröße kann in bekannter Weise anhand vorab hinterlegter Tabellen, Funktionen und/oder Kennlinien ermittelt werden. Durch Berücksichtigen der Gleitreibungsgröße können Gleitreibungseffekte zumindest teilweise (rechnerisch) kompensiert werden, beispielsweise da dann eine der anderen Größen oder aber die ermittelte Soll- und/oder Stellgröße geeignet erhöht oder verringert werden kann, um einen Gleitreibungsanteil zu überwinden, sodass dieser ein Lenkgefühl nicht unerwünscht verfälscht.

Gemäß einer weiteren Ausführungsform umfasst das Verfahren ferner:
- Ermitteln eines zweiten dynamischen Zustands, bei dem eine Änderung des Fahrerlenkwunschs unterhalb einer vorbestimmten Schwelle (die zum Beispiel im Wesentlichen 0 beträgt) und die Fahrdynamikgröße oberhalb einer vorbestimmten Schwelle liegt (die zum Beispiel im Wesentlichen 0 beträgt). Insbesondere kann in diesem Fall also die Lenkposition konstant oder zumindest nahezu konstant bleiben (d. h. eine Lenkgeschwindigkeit (der Lenkhandhabe) kann 0 sein), können aber Fahrzeugbewegungen und/oder dynamische Fahrzeugkräfte auftreten.

Bei dieser Ausführungsform ist weiter vorgesehen, dass dann, wenn der zweite dynamische Zustand vorliegt, folgendes durchgeführt wird:
- Einstellen des Servolenkmoments per Steuerung, wobei eine Stellgröße der Steuerung auf Basis eines Fahrerlenkwunsches, des Lenkwunsches des Fahrerassistenzsystems und einer Reibungsgröße (z.B. Gleitreibungsgröße) ermittelt wird.

Es hat sich gezeigt, dass in diesem Fall trotz wahrscheinlich dominierender Haftreibung aufgrund einer ausbleibenden Änderung des Fahrerlenkwunsches eine Steuerung zu einem natürlicheren Lenkgefühl führen kann, da dann haptische Rückmeldungen aufgrund der Fahrdynamik bzw. des Fahruntergrundes nicht infolge einer Regelung sozusagen unbeabsichtigt bzw. versehentlich heraus geregelt werden.

Eine Weiterbildung sieht vor, dass dann, wenn das Servolenkmoment per Regelung eingestellt wurde, zu einer Steuerung des Servolenkmoments gewechselt wird. Dies kann zum Beispiel dann der Fall sein, wenn eine Regeldifferenz innerhalb der Regelung null wird. Hierdurch kann erreicht werden, dass die Vorteile einer Steuerung nach Überwinden der Reibung möglichst schnell zum Tragen kommen. Prinzipiell kann die Steuerung dann gemäß jeglicher der hierin geschilderten Varianten ausgeführt werden.

Insbesondere kann in diesem Zusammenhang vorgesehen sein, dass das Servolenkmoment unter Berücksichtigung einer Haftreibungsgröße gesteuert wird, wobei die Haftreibungsgröße anhand einer Regelabweichung der Regelung des Servolenkmoments ermittelt wird. Die Regelabweichung kann als Differenz eines im Rahmen der Regelung vorgegebenen Soll-Servolenkmoments und eines erhaltenen Ist-Servolenkmoments ermittelt werden.

Allgemein kann jegliche hierin geschilderte Regelung zumindest solange durchgeführt werden, bis der statische Zustand nicht mehr vorliegt und/oder bis einer von dem ersten oder zweiten dynamischen Zustand vorliegt.

Eine Weiterbildung sieht vor, dass die gemäß einer der vorstehenden Varianten ermittelte Haftreibungsgröße gespeichert wird und eine Mehrzahl gespeicherter Haftreibungsgrößen zwecks Fehlererkennung ausgewertet wird. Anders ausgedrückt können Werte der Haftreibungsgröße fortlaufend und/oder über die Fahrzeuglebensdauer und/oder einen Fahrzeugbetrieb aufgezeichnet werden. Fällt die Haftreibungsgröße unerwartet ab oder nimmt unerwartet stark zu (bzw. erfüllt die Haftreibungsgröße ein vorbestimmtes kritisches Variationskriterium), kann darauf geschlossen werden, dass ein Fehler im Lenksystem vorliegt. Dieser Fehler kann dann durch Anpassen zum Beispiel der Steuerung kompensiert werden und/oder es können Warnungen ausgegeben werden.

Gemäß einer weiteren Ausführungsform wird der Fahrerlenkwunsch modellbasiert ermittelt. Insbesondere wird der Fahrerlenkwunsch, den der Fahrer ohne Fahrerassistenzeingriff aufbringen würde, modellbasiert ermittelt. Dies kann zusätzlich oder alternativ zu einem messtechnischen Erfassen des Fahrerlenkwunsches vorgesehen sein. Insbesondere kann eine Differenz dieser modellbasiert ermittelten Größe und des messtechnisch erfassten Fahrerlenkwunsches gebildet werden. Diese Differenz kann als eine Ist-Größe der Regelung verwendet werden, bspw. als ein umgesetzter Ist-Lenkwunsch bzw. ein Ist-Offset des Fahrerassistenzsystems.

Wie vorstehend erwähnt, kann ebenso vorgesehen sein, dass die Dynamikgröße modellbasiert ermittelt wird.

Als Modell kommen in jeglichem der vorstehenden Fälle übliche Ansätze wie z.B. Einspurmodell, Mehrspurmodell oder Zahnkraftbeobachter in Frage. Diese können auch auf hierin geschilderte Dynamikgrößen als Eingangsgrößen zurückgreifen.

Die Erfindung betrifft auch ein (zum Beispiel digitales und/oder elektronisches) Lenkungssteuergerät (zum Beispiel umfassend wenigstens eine Prozessoreinrichtung) zum Ermitteln einer Stellgröße für das Einstellen eines Servolenkmoments bei einem Fahrzeuglenksystem, wobei das Servolenkmoment von einem Aktor des Fahrzeuglenksystems erzeugbar ist,
wobei das Lenkungssteuergerät folgendes erhält:
   - einen Fahrerlenkwunsch;
   - einen Lenkwunsch von wenigstens einem Fahrerassistenzsystem;
   - wenigstens eine Fahrdynamikgröße;
und wobei das Lenkungssteuergerät dazu eingerichtet ist, einen statischen Zustand zu ermitteln, bei dem eine Änderung des Fahrerlenkwunschs und der Fahrdynamikgröße jeweils unterhalb einer vorbestimmten Schwelle liegt;
sowie, wenn der statische Zustand vorliegt, eine Stellgröße zum Regeln des Servolenkmoments auf Basis eines Fahrerlenkwunsches und des Lenkwunsches des Fahrerassistenzsystems zu ermitteln.

Das Lenkungssteuergerät kann sämtliche weiteren Merkmale und Varianten umfassen, um sämtliche der hierin geschilderten Schritte, Effekte, Betriebszustände und Wechselwirkungen bereitzustellen. Insbesondere kann das Lenkungssteuergerät dazu eingerichtet sein, ein Verfahren gemäß jeglichen der hierin geschilderten Varianten auszuführen. Sämtliche vorstehend erläuterten Varianten und Weiterbildungen der Verfahrensmerkmale können bei den gleichlautenden Merkmalen des Lenkungssteuergeräts ebenso vorgesehen sein beziehungsweise auf diese zutreffen.

Die Erfindung wird im Folgenden anhand der beigefügten Figuren erläutert. Gleichartige oder gleichwirkende Merkmale können darin mit gleichen Bezugszeichen versehen sein.
- Figur 1: zeigt eine Übersichtsdarstellung eines Fahrzeuglenksystems, das ein erfindungsgemäßes Verfahren ausführt und ein erfindungsgemäßes des Lenkungssteuergeräts umfasst,
- Figur 2: zeigt eine schematische Darstellung einer Regelung, die mit dem erfindungsgemäßen Verfahren ausführbar ist; und
- Figur 3: zeigt eine schematische Darstellung einer Steuerung, die mit dem erfindungsgemäßen Verfahren ausführbar ist.

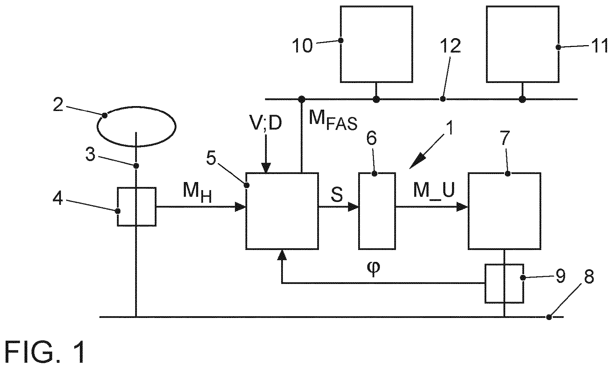

In der Figur 1 ist schematisch ein Fahrzeuglenksystem 1 eines Kraftfahrzeugs dargestellt, das eine Lenkhandhabe 2 aufweist, die mit einer Eingangswelle 3 verbunden ist. An der Eingangswelle 3 ist ein Momentensensor 4 angeordnet, der ein Fahrlenkwunsch in Form eines Handmoments M_{H} an der Lenkhandhabe 2 erfasst.

Weiter weist das Fahrzeuglenksystem 1 ein Lenkungssteuergerät 5, eine Leistungselektronik 6, einen elektrischen Servo-Motor (Aktor) 7 und eine Zahnstange 8 auf. Der Servo-Motor 7 weist einen Rotorlagesensor 9 auf, aus dessen Signalen auf die Stellung der Zahnstange 8 und somit auf den Lenkwinkel geschlossen werden kann.

Dem Lenkungssteuergerät 5 werden die Signale des Momentensensors 4 sowie Signale von Fahrerassistenzsystemen 10, 11 zugeführt, welche einen Lenkwunsch M_{FAS} dieser Fahrerassistenzsysteme 10, 11 angeben. Die Fahrerassistenzsysteme 10, 11 und das Lenkungssteuergerät 5 sind über ein Bussystem 12 miteinander verbunden. Des Weiteren erhält das Lenkungssteuergerät 5 zusätzlich noch als Fahrdynamikgröße D mindestens die Fahrzeuggeschwindigkeit V (oder beliebige andere vorstehend genannte Fahrdynamikgrößen D) von einem nicht dargestellten Sensor oder Steuergerät.

In Abhängigkeit der Eingangsgrößen M_{H}, V und dem Lenkwunsch M_{FAS} der Fahrerassistenzsysteme 10, 11 erzeugt das Lenkungssteuergerät 5 eine Stellgröße in Form eines Stellsignals S, für die Leistungselektronik 6, die dann entsprechend den Servo-Motor 7 bestromt, damit dieser per Servolenkmoment M_U die Zahnstange 8 bewegt. Der Servo-Motor 7 kann dabei über ein nicht dargestelltes Getriebe mit der Zahnstange 8 verbunden sein. Die Umsetzung des Servolenkmoments M_U in eine Zahnstangenbewegung erfolgt prinzipiell reibungsbehaftet. Der Rotorlagesensor 9 liefert einen Rotorwinkel ϕ, mittels dem aufgrund der bekannten Übersetzung die Position der Zahnstange 8 ermittelt wird. Weiter sei angemerkt, dass die Eingangswelle 3 im mechanischen Eingriff mit der Zahnstange 8 steht und der Aktor 7 als Lenkunterstützungsaktor wirkt. Ein vom Aktor 7 erzeugtes Moment wirkt sich daher auch auf die Lenkhandhabe 2, die Eingangswelle 3 sowie auf die Messsignale des Momentensensors 4 aus.

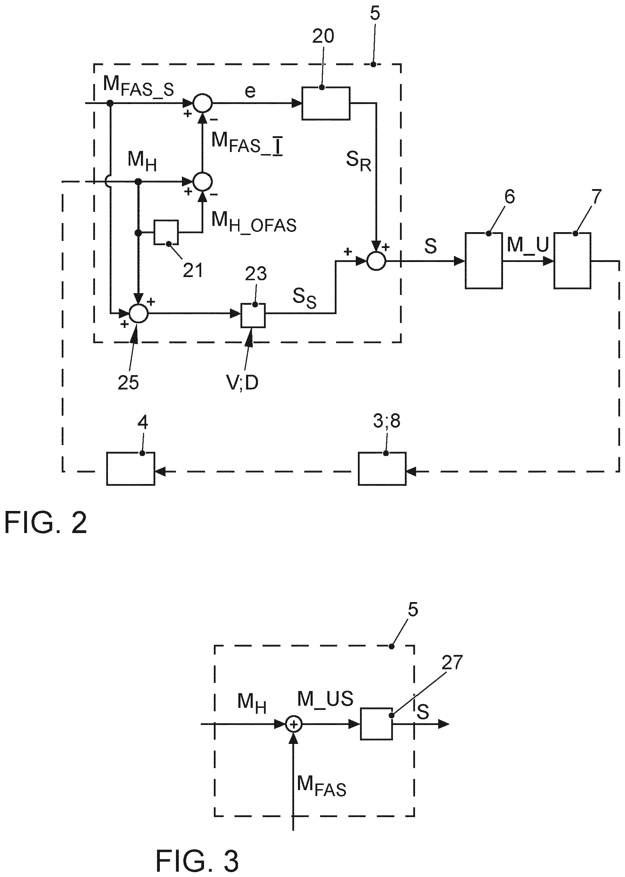

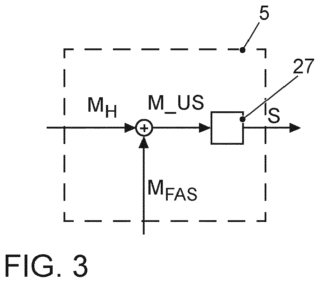

Im Folgenden wird anhand der Figuren 2 und 3 die Erzeugung der Stellgröße S in verschiedenen Betriebszuständen und insbesondere verschiedenen Reibungszuständen näher erläutert. Diese Figuren zeigen jeweils die Signalverarbeitung innerhalb des Lenkungssteuergerät 5, die lediglich symbolisch dargestellt ist und in bekannter Weise anhand von Programmanweisungen ausgeführt bzw. berechnet wird.

In Figur 2 wurde von dem Lenkungssteuergerät 5 das Vorliegen eines statischen Zustands ermittelt. Dieser zeichnet sich dadurch aus, dass sich der ursprüngliche Fahrerlenkwunsch M_{H} (z.B. die angestrebte Lenkposition und/oder Lenkgeschwindigkeit) nicht ändert, aber auch nicht die Dynamikgrößen D (zum Beispiel die Fahrgeschwindigkeit V). Bevorzugt wird ermittelt, dass die Lenkgeschwindigkeit gegen null geht oder null beträgt. In dem statischen Fall stellt das Lenkungssteuergerät 5 das Servolenkmoment M_U oder, genauer gesagt, die Stellgröße S, auf deren Basis das Servolenkmoment M_U erzeugt wird, per Regelung ein. Auf diese Regelung beziehen sich die in Figur 2 dargestellten Signalflüsse.

Gezeigt ist, dass der Soll-Lenkwunsch M_{FAS_S} der Fahrerassistenzsysteme (Soll-Offset-Moment) 10, 11 als einzustellende Sollgröße erhalten wird. Dieser entspricht dem allgemeinen Lenkwunsch M_{FAS} der Fahrerassistenzsysteme 10, 11 aus Figur 1. Weiter wird der aktuelle umgesetzte Ist-Lenkwunsch M_{FAS_I} des Fahrerassistenzsystems 10, 11 ermittelt. In dem gezeigten statischen Fall wird hierfür das Handlenkmoment M_{H} als Basis zum Bestimmen der entsprechenden Istgröße verwendet.

Genauer gesagt wird dasjenige Handlenkmoment M_{H_OFAS}, das beim Erkennen und folglich zu Beginn des statischen Zustands vorlag, in einer Speichereinrichtung 21 gespeichert und dann als Referenz zum Einregeln des Soll-Lenkwunsches M_{FAS_S} der Fahrerassistenzsysteme 10, 11 verwendet. Das gespeicherte Handlenkmoment M_{H_OFAS} entspricht dem Handlenkmoment M_{H} ohne Eingriff der Fahrerassistenzsysteme 10, 11. Dieses wird von einem aktuellen Handlenkmoment M_{H} subtrahiert, wobei die erhaltene Differenz dem Ist-Lenkwunsch M_{FAS_I} des Fahrerassistenzsystems 10, 11 (d. h. Ist-Offset an der Lenkhandhabe 2) entspricht. Demnach liefert das Handlenkmoment M_{H} und insbesondere das gespeicherte Handlenkmoment M_{H_OFAS} bzw. eine Differenz dieser Größen eine Referenz, um zu ermitteln, inwieweit der Soll-Lenkwunsch M_{FAS_S} des Fahrerassistenzsystems 10, 11 bereits umgesetzt (d. h. eingeregelt) wurde.

Wie ferner in Figur 2 gezeigt, wird dann eine Regelabweichung e aus dem Soll- und dem Ist-Lenkwunsch M_{FAS_S}, M_{FAS_I} der Fahrerassistenzsysteme 10, 11 berechnet und einem Regler 20 zugeführt. Dieser gibt dann einen Betrag S_{R} der Stellgröße S zum Einregeln des Soll-Lenkwunsch M_{FAS_S} der Fahrerassistenzsysteme 10, 11 aus.

Bevorzugt wird eine weitere Komponente der Stellgröße Sₛ zum Bereitstellen von grundsätzlichen Lenksystemfunktionen ermittelt. In dem gezeigten Beispiel wird dies mittels einer Steuerungsfunktionen 23 erreicht, die auch als Lenksystemfunktion (und/oder Lenkkraftunterstützungsfunktion) bezeichnet werden könnte. Diese Steuerungsfunktionen 23 erhält beispielhaft den aktuellen Fahrerlenkwunsch M_{H} und bevorzugt auch die Dynamikgrößen V, D erhält, um dann in an sich bekannter Weise und zum Beispiel per geschwindigkeitsabhängiger Kennlinie die entsprechende Stellgröße Sₛ anhand der erhaltenen Größen zu ermitteln.

Optional kann auch eine Vorsteuerung vorgesehen werden, bei der der Soll-Lenkwunsch M_{FAS_S} des Fahrerassistenzsystems 10, 11 und der Fahrerlenkwunsch M_{H} aufaddiert und der Steuerungsfunktion 23 zugeführt werden. Hierauf richtet sich der optionale Summenknoten 25 und der damit zusammenhängende Signalfluss.

Die gezeigte erfindungsgemäße Lösung zeichnet sich in diesem Zusammenhang insbesondere durch den Schritt aus, den statischen Zustand zu erkennen und dann die gezeigte Regelung zu aktivieren, um darauf basierend die Stellgröße S zum Einstellen des Servolenkmoments M_U zu ermitteln. Weiter zeichnet sich die Lösung dadurch aus, dass der Regelung der im statischen Zustand vorliegende (aktuelle) Fahrerlenkwunsch M_{H} zugrunde gelegt wird und genauer gesagt als der der anfänglich vorliegende (aktuelle) Fahrerlenkwunsch M_{H_OFAS} abgespeichert wird. Der (Soll-)Lenkwunsch M_{FAS} des Fahrerassistenzsystems 10, 11 wird dann sozusagen eingeregelt bzw. per Regelung beim Erzeugen des Servolenkmoments M_U berücksichtigt.

Ein weiterer in Fig. 2 strichliert angedeuteter Signalfluss betrifft die zumindest mittelbare Rückführung des per Stellgröße S eingestellten Servolenkmoments M_U. Genauer gesagt wirkt sich dies über die Lenkkomponenten aus Figur 1 und insbesondere die Zahnstange 8 und Eingangswelle 3 auf den Drehmomentsensor 4 aus, aus dessen Messsignalen das Handlenkoment M_{H} ermittelt wird. Da darauf basierend dann die Istgröße M_{FAS_I} ermittelt wird, ergibt sich ein geschlossener Regelkreis.

Darauf hinzuweisen ist, dass die entsprechende Rückführung bevorzugt erst nach Abspeichern des aktuellen Handlenkmoments M_{H} als die Größe M_{H_OFAS} beim Erkennen des statischen Zustandes aktiviert wird.

Alternativ kann vorgesehen sein, dass statt dem Abspeichern mittels einer Speichereinrichtung 21 das Handlenkmoment M_{H_OFAS} ohne Eingriff des Fahrerassistenzsystems 10, 11 Modell basiert ermittelt wird. In diesem Fall könnte statt der Speichereinrichtung 21 in Figur 2 ein Modellblock ergänzt werden, der dann eingangsseitig auch nicht notwendigerweise mit dem Handlenkmoment M_{H} verknüpft ist, aber ausgangsseitig das entsprechend modellbasiert ermittelte Handlenkmoment M_{H_OFAS} an den zugeordneten Differenzknoten aus Figur 2 ausgibt.

In Figur 3 ist eine Variante gezeigt, bei der das Lenkungssteuergerät 5 statt einer Regelung eine Steuerung der Stellgröße S zum Einstellen eines Gesamtsolllenkwunsches M_US vornimmt, das sich aus Handlenkmoment M_{H} und dem Lenkwunsch M_{FAS} der Fahrerassistenzsysteme 10, 11 zusammensetzt. Eine solche Steuerung wird dann vorgenommen, wenn der erste oder zweite dynamische Zustand gemäß der vorstehenden allgemeinen Beschreibung von dem Lenkungssteuergerät 5 erkannt wird.

Mittels einer Umrechnungsfunktion 27, die zum Beispiel Bestandteil des Steuerungsalgorithmus ist, (aber auch auf jegliche andere Weise) wird in diesem Fall vorzugsweise ein Reibungszustand berücksichtigt. Hierfür wird mittels herkömmlicher Lösungen eine Gleitreibungsgröße geschätzt und die Stellgröße S geeignet angepasst, um die Gleitreibungsgröße zu kompensieren.

Folglich kann also das Lenkungssteuergerät 5 wahlweise entweder die Regelung von Figur 2 oder die Steuerung von Figur 3 ausführen, um den Lenkwunsch M_{FAS} eines Fahrerassistenzsystems 10, 11 zu berücksichtigen, je nachdem, welcher der statischen oder dynamischen Zustände aktuell vorliegt. Wie vorstehend im allgemeinen Teil diskutiert, lässt sich hierdurch ein gewünschtes Lenkgefühl erzielen und lassen sich Reibungseffekte auch ein Beaufschlagen mit dem Lenkwunsch M_{FAS} eines Fahrerassistenzsystems 10, 11 ausreichend präzise berücksichtigen.

Die Erfindung ist nicht auf die gezeigten Ausführungsbeispiele und insbesondere nicht deren einzelne Details und Merkmale beschränkt. Weitere Ausführungsformen und Varianten wurden vorstehend im allgemeinen Beschreibungsteil erläutert.

Beispielsweise kann auch vorgesehen sein, dass sobald die Regelabweichung e aus Figur 2 zu null wird und vorzugsweise wenn der statische Zustand dann noch vorliegt, auf eine Steuerung umzuschalten. Zur Reibungskompensation wird dann die zuvor eingeregelte Stellgröße SR gespeichert. Diese kann als eine Haftreibungsgröße berücksichtigt und rechnerisch kompensiert werden (zum Beispiel durch entsprechendes Erhöhen des Servolenkmoments M_U um den Betrag dieser Haftreibungsgröße bei hierzu entgegengesetztem Vorzeichen). Dies kann mit der Umrechnungsfunktion 27 aus Figur 3 umgesetzt werden.

### Bezugszeichenliste

- 1: Fahrzeuglenksystem
- 2: Lenkhandhabe
- 3: Eingangswelle
- 4: Momentensensor
- 5: Lenkungssteuergerät
- 6: Leistungselektronik
- 7: Servo-Motor (Aktor)
- 8: Zahnstange
- 9: Rotorlagesensor
- 10,11: Fahrerassistenzsysteme
- 12: Bussystem
- 20: Regler
- 21: Speichereinrichtung
- 23: Steuerfunktion
- 27: Umrechnungsfunktion
- V: Fahrzeuggeschwindigkeit
- D: Fahrdynamikgröße
- S: Stellgröße
- M_U: Servolenkmoment
- M_US: Gesamt-Solllenkwunsch
- M_{H}: Lenkwunsch Fahrer (Handmoment)
- M_{FAS}: Lenkwunsch Fahrerassistenzsysteme
- e: Regelabweichung

## Patentansprüche

1. Verfahren zum Einstellen eines Servolenkmoments (M_U) bei einem Fahrzeuglenksystem (1), wobei das Servolenkmoment (M_U) von einem Aktor des Fahrzeuglenksystems (1) erzeugbar ist, mit:
- Erhalten eines Fahrerlenkwunsches (M_{H});
- Erhalten eines Lenkwunsches von wenigstens einem Fahrerassistenzsystem (M_{FAS});
- Erhalten von wenigstens einer Fahrdynamikgröße (D); **dadurch gekennzeichnet, dass** das Verfahren die weiteren Schritte aufweist:
- Ermitteln eines statischen Zustands, bei dem eine Änderung des Fahrerlenkwunschs (M_{H}) und der Fahrdynamikgröße (D) jeweils unterhalb einer vorbestimmten Schwelle legt;
und wenn der statische Zustand ermittelt wurde:
- Einstellen des Servolenkmoments (M_U) per Regelung, wobei eine Stellgröße (S) der Regelung auf Basis eines Fahrerlenkwunsches (M_{H}) und des Lenkwunsches des Fahrerassistenzsystems (M_{FAS}) ermittelt wird.

2. Verfahren nach Anspruch 1, ferner umfassend:
- Ermitteln eines ersten dynamischen Zustands, bei dem eine Änderung des erhaltenen Fahrerlenkwunschs (M_{H}) als auch der Fahrdynamikgröße (D) oberhalb einer vorbestimmten Schwelle liegt,
und wenn der erste dynamische Zustand ermittelt wurde:
- Einstellen des Servolenkmoments (M_U) per Steuerung,

3. Verfahren nach Anspruch 2,
wobei eine Stellgröße der Steuerung auf Basis eines Fahrerlenkwunsches (MH), des Lenkwunsches des Fahrerassistenzsystems (MFAS) und einer Gleitreibungsgröße ermittelt wird.

4. Verfahren nach einem der vorangehenden Ansprüche, ferner umfassend:
- Ermitteln eines zweiten dynamischen Zustands, bei dem eine Änderung des erhaltenen Fahrerlenkwunschs (M_{H}) und/oder eine Lenkgeschwindigkeit unterhalb einer vorbestimmten Schwelle und die Fahrdynamikgröße (D) oberhalb einer vorbestimmten Schwelle liegt,
und wenn der zweite dynamische Zustand vorliegt:
- Einstellen des Servolenkmoments (M_U) per Steuerung, wobei eine Stellgröße der Steuerung auf Basis eines Fahrerlenkwunsches (M_{H}), des Lenkwunsches des Fahrerassistenzsystems (M_{FAS}) und einer Reibungsgröße ermittelt wird.

5. Verfahren nach Anspruch 1,
wobei dann, wenn das Servolenkmoment (M_U) per Regelung eingestellt wurde, zu einer Steuerung des Servolenkmoments (M_U) gewechselt wird.

6. Verfahren nach Anspruch 5,
wobei das Servolenkmoment (M_U) unter Berücksichtigung einer Haftreibungsgröße (HR) gesteuert wird, wobei die Haftreibungsgröße (HR) anhand einer Regelabweichung der Regelung des Servolenkmoments (M_U) ermittelt wird.

7. Verfahren nach Anspruch 6,
wobei die Regelabweichung als Differenz eines im Rahmen der Regelung vorgegebenen Soll-Servolenkmoment und eines erhaltenen Ist-Servolenkmoment (M_U) ermittelt wird.

8. Verfahren nach Anspruch 6 oder 7,
wobei die Haftreibungsgröße gespeichert wird und eine Mehrzahl gespeicherter Haftreibungsgrößen zwecks Fehlererkennung ausgewertet wird.

9. Verfahren nach Anspruch 1,
wobei für die Regelung der Fahrerlenkwunsch (M_{H}) und/oder ein Fahrerlenkwunsch (M_{H_OFAS}) ohne Eingriff des Fahrerassistenzsystems (10, 11) modellbasiert ermittelt wird.

10. Verfahren nach Anspruch 1,
wobei die Dynamikgröße (D) modellbasiert ermittelt wird.

11. Lenkungssteuergerät (5) zum Ermitteln einer Stellgröße für das Einstellen eines Servolenkmoments (M_U) bei einem Fahrzeuglenksystem (1), wobei das Servolenkmoment (M_U) von einem Aktor des Fahrzeuglenksystems (1) erzeugbar ist, wobei das Lenkungssteuergerät folgendes erhält:
- einen Fahrerlenkwunsch (M_{H});
- einen Lenkwunsch von wenigstens einem Fahrerassistenzsystem (M_{FAS});
- wenigstens einer Fahrdynamikgröße (D);
und **dadurch gekennzeichnet, dass** das Lenkungssteuergerät, dazu eingerichtet ist, einen statischen Zustand zu ermitteln, bei dem eine Änderung des Fahrerlenkwunschs (M_{H}) und der Fahrdynamikgröße (D) jeweils unterhalb einer vorbestimmten Schwelle liegt; sowie im statischen Zustand eine Stellgröße (S) zum Regeln des Servolenkmoments (M_U) auf Basis eines Fahrerlenkwunsches (M_{H}) und des Lenkwunsches des Fahrerassistenzsystems (M_{FAS}) zu ermitteln.

## Claims

1. Method for adjusting a power steering torque (M_U) in a vehicle steering system (1), wherein the power steering torque (M_U) can be generated by an actuator of the vehicle steering system (1), comprising:
- receiving a driver steering request (M_{H});
- receiving a steering request of at least one driver assistance system (M_{FAS});
- receiving at least one driving dynamics variable (D);
**characterized in that** the method has the further steps of:
- determining a static state in which a change of the driver steering request (M_{H}) and of the driving dynamics variable (D) are respectively below a predetermined threshold;
and, if the static state has been determined:
- adjusting the power steering torque (M_U) by means of closed-loop control, wherein a manipulated variable (S) of the control is determined on the basis of a driver steering request (M_{H}) and the steering request of the driver assistance system (M_{FAS}).

2. Method according to claim 1, further comprising:
- determining a first dynamic state in which a change of the received driver steering request (M_{H}) and also of the driving dynamics variable (D) are above a predetermined threshold,
and, if the first dynamic state has been determined:
- adjusting the power steering torque (M_U) by means of open-loop control.

3. Method according to claim 2,
wherein a manipulated variable of the open-loop control is determined on the basis of a driver steering request (MH), the steering request of the driver assistance system (MFAS), and a sliding friction variable.

4. Method according to any of the preceding claims, further comprising:
- determining a second dynamic state in which a change of the received driver steering request (M_{H}) and/or a steering speed is/are below a predetermined threshold and the driving dynamics variable (D) is above a predetermined threshold,
and, if the second dynamic state is present:
- adjusting the power steering torque (M_U) by means of open-loop control, wherein a manipulated variable of the open-loop control is determined on the basis of a driver steering request (M_{H}), the steering request of the driver assistance system (M_{FAS}), and a friction variable.

5. Method according to claim 1,
wherein, when the power steering torque (M_U) has been adjusted by means of closed-loop control, a switch is made to open-loop control of the power steering torque (M_U).

6. Method according to claim 5,
wherein the power steering torque (M_U) is controlled under consideration of a static friction variable (HR), wherein the static friction variable (HR) is determined using a deviation in the closed-loop control of the power steering torque (M_U).

7. Method according to claim 6,
wherein the deviation is determined as a difference between a target power steering torque, specified within the scope of the closed-loop control, and a received actual power steering torque (M_U).

8. Method according to claim 6 or 7,
wherein the static friction variable is stored, and a plurality of stored static friction variables is evaluated for the purpose of error detection.

9. Method according to claim 1,
wherein, for the closed-loop control, the driver steering request (M_{H}) and/or a driver steering request (M_{H_OFAS}) is/are determined in a model-based manner without intervention of the driver assistance system (10, 11).

10. Method according to claim 1,
wherein the dynamic variable (D) is determined in a model-based manner.

11. Steering control device (5) for determining a manipulated variable for adjusting a power steering torque (M_U) in a vehicle steering system (1), wherein the power steering torque (M_U) can be generated by an actuator of the vehicle steering system (1),
wherein the steering control device receives the following:
- a driver steering request (M_{H});
- a steering request of at least one driver assistance system (M_{FAS});
- at least one driving dynamics variable (D);
and **characterized in that** the steering control device is configured to determine a static state in which a change of the driver steering request (M_{H}) and of the driving dynamics variable (D) are respectively below a predetermined threshold;
and, in the static state, to determine a manipulated variable (S) for the closed-loop control of the power steering torque (M_U) on the basis of a driver steering request (M_{H}) and the steering request of the driver assistance system (M_{FAS}).

## Revendications

1. Procédé de réglage d'un couple de direction assistée (M_U) dans un système de direction de véhicule (1), le couple de direction assistée (M_U) pouvant être généré par un actionneur du système de direction de véhicule (1), comprenant :
- réception d'un mouvement de braquage de conducteur (M_{H}) ;
- réception d'un mouvement de braquage d'au moins un système d'assistance au conducteur (M_{FAS}) ;
- réception d'au moins une grandeur de dynamique de conduite (D) ;
**caractérisé en ce que** le procédé présente les autres étapes de :
- détermination d'un état statique, dans lequel une modification du mouvement de braquage de conducteur (M_{H}) et de la grandeur de dynamique de conduite (D) est respectivement inférieure à un seuil prédéfini ;
et lorsque l'état statique a été déterminé :
- réglage du couple de direction assistée (M_U) par régulation, une grandeur de réglage (S) de la régulation étant déterminée sur la base d'un mouvement de braquage de conducteur (M_{H}) et du mouvement de braquage du système d'assistance au conducteur (M_{FAS}).

2. Procédé selon la revendication 1, comprenant en outre :
- détermination d'un état dynamique, dans lequel une modification du mouvement de braquage de conducteur (M_{H}) obtenu ainsi que de la grandeur de dynamique de conduite (D) est supérieure à un seuil prédéfini,
et lorsque l'état dynamique a été déterminé :
- réglage du couple de direction assistée (M_U) par commande.

3. Procédé selon la revendication 2,
dans lequel une grandeur de réglage de la commande est déterminée sur la base d'un mouvement de braquage de conducteur (MH), du mouvement de braquage du système d'assistance au conducteur (MFAS) et d'une grandeur de friction de glissement.

4. Procédé selon l'une quelconque des revendications précédentes, comprenant en outre :
- détermination d'un deuxième état dynamique, dans lequel une modification du mouvement de braquage de conducteur (M_{H}) obtenu et/ou une vitesse de braquage sont inférieures à un seuil prédéfini et la grandeur de dynamique de conduite (D) est supérieure à un seuil prédéfini,
et lorsque le deuxième état dynamique est disponible :
- réglage du couple de direction assistée (M_U) par commande, une grandeur de réglage de la commande étant déterminée sur la base d'un mouvement de braquage de conducteur (M_{H}) et du mouvement de braquage du système d'assistance au conducteur (M_{FAS}) et d'une grandeur de friction.

5. Procédé selon la revendication 1,
dans lequel, lorsque le couple de direction assistée (M_U) a été réglé par régulation, une commutation à la commande du couple de direction assistée (M_U) est effectuée.

6. Procédé selon la revendication 5,
dans lequel le couple de direction assistée (M_U) est commandé en tenant compte d'une grandeur de friction statique (HR), la grandeur de friction statique (HR) étant déterminée au moyen d'un écart de réglage de la régulation du couple de direction assistée (M_U).

7. Procédé selon la revendication 6,
dans lequel l'écart de réglage est déterminé comme une différence d'un couple de direction assistée de consigne prédéfini dans le cadre de la régulation et d'un couple de direction assistée réel (M_U).

8. Procédé selon la revendication 6 ou 7,
dans lequel la grandeur de friction statique est enregistrée et une pluralité de grandeurs de friction statique enregistrées est évaluée aux fins de détection d'erreur.

9. Procédé selon la revendication 1,
dans lequel, pour la régulation, le mouvement de braquage de conducteur (M_{H}) et/ou un mouvement de braquage de conducteur (M_{H_OFAS}) sans intervention du système d'assistance au conducteur (10, 11) sont déterminés sur la base d'un modèle.

10. Procédé selon la revendication 1,
dans lequel la grandeur de dynamique de conduite (D) est déterminée sur la base d'un modèle.

11. Appareil de commande de direction (5) permettant de déterminer une grandeur de réglage pour le réglage d'un couple de direction assistée (M_U) dans un système de direction de véhicule (1), le couple de direction assistée (M_U) pouvant être généré par un actionneur du système de direction de véhicule (1),
l'appareil de commande de direction recevant les informations suivantes :
- un mouvement de braquage de conducteur (M_{H}) ;
- un mouvement de braquage d'au moins un système d'assistance au conducteur (M_{FAS}) ;
- au moins une grandeur de dynamique de conduite (D) ;
et **caractérisé en ce que** l'appareil de commande de direction est conçu pour déterminer un état statique, dans lequel une modification du mouvement de braquage de conducteur (M_{H}) et de la grandeur de dynamique de conduite (D) est respectivement inférieure à un seuil prédéfini ;
ainsi que pour déterminer, à l'état statique, une grandeur de réglage (S) pour la régulation du couple de direction assistée (M_U) sur la base d'un mouvement de braquage de conducteur (M_{H}) et du mouvement de braquage du système d'assistance au conducteur (M_{FAS}).
